# EUROPEAN PATENT SPECIFICATION

(11) **EP 0 436 349 B1**
(45) Date of publication and mention of the grant of the patent: **12.10.1994**
(21) Application number: 90313845.1
(22) Date of filing: 18.12.1990
(51) Int. Cl.: F21P 1/02

(54) **Decorative lamp**
Dekorative Leuchte
Lampe décorative

(30) Priority: 02.01.1990 US 459632
(43) Date of publication of application: 10.07.1991
(73) Proprietor: Lin, Ming-Hung, Taipei (TW)
(72) Inventor: Lin, Ming-Hung, Taipei (TW)
(74) Representative: Stoner, Gerard Patrick

(56) References cited:
- EP-A- 0 215 666
- US-A- 3 937 948
- US-A- 4 163 998
- PATENT ABSTRACTS OF JAPAN, vol. 6, no. 66 (P-112)[944], 27th April 1982;& JP-A-57 6878 (FUJI SHASHIN KOKI K.K.) 13-01-1982

## Description

The present invention relates to a holographic decorative lamp.

A conventional lamp is generally served for illuminating purpose. Several conventional display devices disclosed the using of a plurality of optical fibres bunched together at one end, at which a light source is illuminated for decorative purpose. Such an optical-fiber constructed display device is difficult to make since it requires much labor, causing an increase of its production cost. Meanwhile, the display device with optical fibers can not provide a bright illuminating effect and is merely served for single decorative use.

In the prior art, JP-A-57-6878 discloses a decorative lamp including a cylindrical hologram, provided with at least a hologram film, which is rotatably mounted on a stand and irradiated by an exothermic white light source, whereby reconstructed images are obtained.

However, the prior art does not disclose the holograms on the film corresponding to the light source to directly show a plurality of images of the light source when irradiated.

The invention provides a decorative lamp as defined in Claim 1. Thus there is provided a holographic decorative lamp including a holographic film pre-recorded with many interference patterns of a light source portion formed on a shade of the lamp, whereby upon an illumination of the lamp, plural three-dimensional or superimposed images of the light source portion can be observed through the holographic film for decorative purpose and the lamp itself may also provide illuminating effect.

In another particular aspect, I provide a holographic decorative lamp comprising:
an illuminator having a light source portion formed on a top portion of the illuminator;
a base for holding and supporting said illuminator thereon;
a shade shielding said light source portion of said illuminator having a transparent portion or an opening formed in the shade for transmitting light therethrough; and
at least a holographic film pre-recorded with a plurality of holograms of said light source portion of said illuminator, said holographic film embedded in said opening of said shade or coated on said transparent portion of said shade, whereby upon an illumination of said light source portion, a plurality of images of said light source portion are viewed through said holographic film for decorative and illumination purposes.

Embodiments of the invention are described with reference to the accompanying drawings, in which:
Figure 1 is a front view of one embodiment;
Figure 2 is a side view of the Figure 1 embodiment;
Figure 3 shows another embodiment of the present invention;
Figure 4 is a partial sectional drawing of the embodiment as shown in Figure 3;
Figure 5 shows the making of a holographic recording plate, and
Figure 6 shows a reconstruction of a torch image.

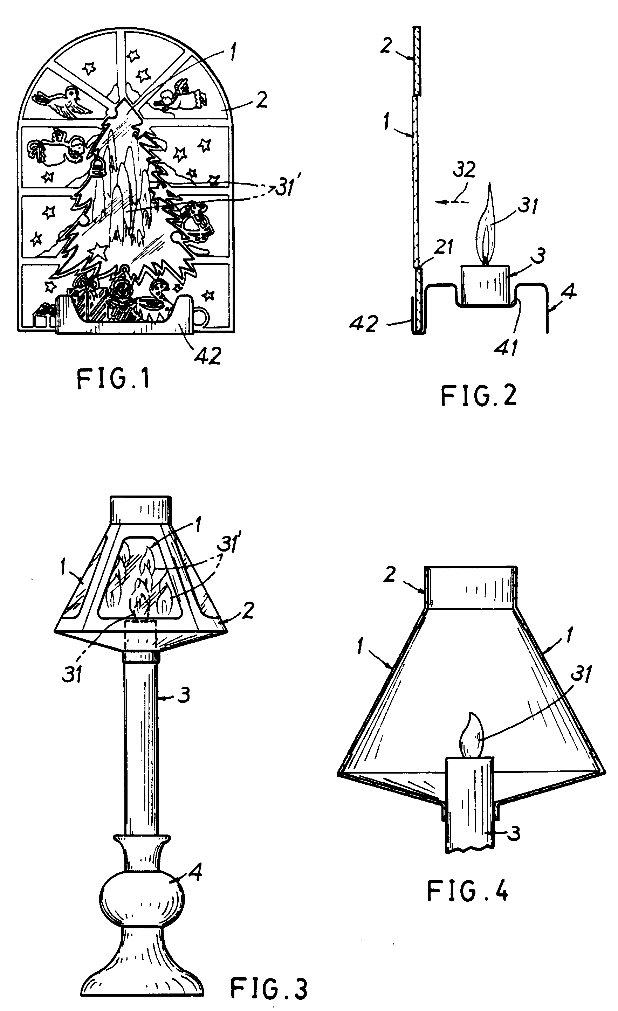

As shown in Figures 1 and 2, a decorative lamp comprises: a holographic film 1 embedded on a shade 2, an illuminator 3 which may be e.g. a wax candle giving a flame as a light source 31, and a base 4 for holding and supporting the illuminator 3.

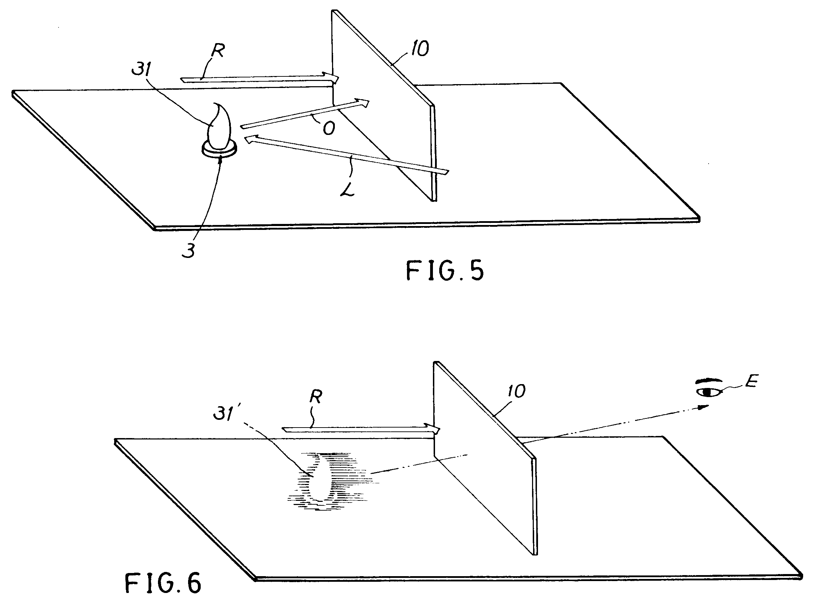

The holographic film 1 used in the lamp may be reproduced or copied from a holographic recording plate as made by the steps as illustrated in Figures 5 and 6, in which a laser beam is split into two beams of which one reference beam R is directly aimed at a photographic recording plate 10 and the other object beam L is aimed at a torch 31 of the illuminator 3 which may be a candle as shown in Figure 2 and then reflected (O) to project towards the recording plate 10, thereby making interference patterns of a hologram of the torch 31 on the plate 10.

When the processed plate 10 is illuminated by aiming the reconstruction beam which may be the original reference beam R, a hologram image 31' can be observed through the plate 10 by an observer's eye E as shown in Figure 6. In processing the recording plate 10, the directions of the reference beam relative to the plate 10 may be changed between exposures so as to form plural superimposed interference patterns of the lamp torch 31. By changing the angles of illumination, a plurality of torch images may be reconstructed so that the finished holographic recording plate 10 as shown in Figure 1 may provide a plurality of images 31' of the torch 31 of illuminator 3. The recording plate 10 may be reproduced or copied to form a holographic film 1 to be used in a lamp.

The holographic film 1 may be formed on the shade 2 by embedding the film 1 in a window 21 of the shade 2 or coating the film 1 on a transparent shade 2, or by other fixing methods.

The base 4 as shown in Figure 2 is formed a socket 41 for fixing the illuminator 3 of candle therein and a bracket 42 for inserting the film 1 in the bracket 42 of the base 4.

Another embodiment of the present invention is shown in Figures 3 and 4, wherein the illuminator of candle 3 as shown in Figure 2 has been replaced by an electric light 3 shaped like a candle having a bulb 31 formed on its top portion to imitate the flame 31 of the candle illuminator 3 as shown in Figure 2. The shade 2 is formed a cone shape surrounding the bulb 31 of the illuminator 3. A plurality of holographic films 1 may be formed on the shade 2 as shown in Figure 4. The illuminator 3 shaped as a candle is held on a base 4 as shown in Figure 3. The lamp as shown in Figure 3 may be powered by a battery (not shown) stored in the base or by a power source of AC current.

Lamps using the present concepts may be modified or changed in shapes, forms, materials or arrangements of all elements in construction of the lamp.

A lamp as described may have the following advantages over the conventional lamps or optical display devices:
1. The flame or bulb 31 of the illuminator 3 may serve for illuminating the surroundings and also for producing a plurality of flame images 31' for decorative purpose.
2. The holographic film 1 is directly formed in situ in the shade 2 for producing a plurality of images of multiple superimposed views or three-dimentional view, without requiring any additional complex decorating mechanism for reducing production cost and minimizing maintenance problems of the lamp.
3. The lamp can be either a candle made of wax without the need of electric source or an electric light such as powered by a battery for alternative choices.

## Claims

1. A decorative lamp comprising:
an illuminator (3) providing a light source portion (31); and a shade or screen (2) shielding said light source portion (31) of said illuminator (3) and having at least one light-transmitting portion comprising a holographic film (1) pre-recorded with a plurality of holograms, whereby illumination from said light source portion (31) enables a plurality of images (31') of said light source portion (31) to be viewed through said holographic film (1) to give a decorative and illuminating effect, characterized in that:
the holograms on the film (1) correspond to said light source portion (31) of said illuminator (3).

2. A decorative lamp according to Claim 1, in which the light source portion (31) has the form of a flame.

3. A decorative lamp according to Claim 2 wherein said illuminator (3) is a candle made of wax and said light source portion (31) a flame thereof.

4. A decorative lamp according to Claim 1 wherein said illuminator (3) is an electric light having a bulb (31) as said light source portion (31).

5. A decorative lamp according to Claim 1, wherein said shade (2) is mounted on a bracket (42) on a base (4), and positioned in front of said light source portion (31) of said illuminator (3).

## Patentansprüche

1. Dekorative Leuchte umfassend:
einen Illuminator (3), der einen Lichtquellenabschnitt (31) vorsieht; und einen Schirm oder eine Blende (2), der bzw. die den genannten Lichtquellenabschnitt (31) des genannten Illuminators (3) abschirmt und zumindest einen lichtübertragenden Abschnitt aufweist, der einen holographischen Film (1) umfaßt, der mit einer Vielzahl an Hologrammen voraufgezeichnet ist, wobei es die Beleuchtung aus dem genannten Lichtquellenabschnitt (31) ermöglicht, daß eine Vielzahl an Bildern (31') des genannten Lichtquellenabschnitts (31) durch den genannten holographischen Film (1) betrachtet werden können, um eine dekorative Leuchtwirkung zu erzeugen, dadurch gekennzeichnet, daß:
die Hologramme auf dem Film (1) mit dem genannten Lichtquellenabschnitt (31) des genannten Illuminators (3) übereinstimmen.

2. Dekorative Leuchte nach Anspruch 1, worin der Lichtquellenabschnitt (31) die Form einer Flamme aufweist.

3. Dekorative Leuchte nach Anspruch 2, worin der genannte Illuminator (3) eine Wachskerze und der genannte Lichtquellenabschnitt (31) eine Flamme davon ist.

4. Dekorative Leuchte nach Anspruch 1, worin der genannte Illuminator (3) ein elektrisches Licht mit einer Glühbirne (31) als genanntem Lichtquellenabschnitt (31) ist.

5. Dekorative Leuchte nach Anspruch 1, worin der genannte Schirm (2) auf einem Träger (42) auf einer Basis (4) montiert und vor dem genannten Lichtquellenabschnitt (31) des genannten Illuminators (3) angeordnet ist.

## Revendications

1. Lampe décorative comprenant :
un dispositif d'éclairage (3) produisant une partie de source de lumière (31) ; et un abat-jour ou un écran (2) masquant ladite partie de source de lumière (31) dudit dispositif d'éclairage (3) et ayant au moins une partie de transmission de lumière comprenant une pellicule holographique (1) pré-enregistrée avec une pluralité d'hologrammes, de sorte que l'éclairage à partir de ladite partie de source de lumière (31) permette de voir une pluralité d'images (31') de ladite partie de source de lumière (31) à travers ladite pellicule holographique (1) pour conférer un effet décoratif et éclairant, caractérisée en ce que : les hologrammes sur la pellicule (1) correspondent à ladite partie de source de lumière (31) dudit dispositif d'éclairage (3).

2. Lampe décorative selon la revendication 1, dans laquelle la partie de source de lumière (31) a la forme d'une flamme.

3. Lampe décorative selon la revendication 2, dans laquelle ledit dispositif d'éclairage (3) est une bougie en cire et ladite partie de source de lumière (31) est une flamme de celle-ci.

4. Lampe décorative selon la revendication 1, dans laquelle ledit dispositif d'éclairage (3) est une lumière électrique ayant une ampoule (31) en tant que partie de source de lumière (31).

5. Lampe décorative selon la revendication 1, dans laquelle ledit abat-jour (2) est monté sur un support (42) sur une base (4) et positionné en face de ladite partie de source de lumière (31) dudit dispositif d'éclairage (3).
